# EUROPEAN PATENT APPLICATION

(11) **EP 4 779 194 A1**
(43) Date of publication of application: **22.07.2026**
(21) Application number: 26152991.1
(22) Date of filing: 20.01.2026
(51) Int. Cl.: F16M 11/10, F16M 13/00, F16M 13/02, H04M 1/02

(54) **MOUNTING SYSTEM FOR A TABLET**

(30) Priority: 20.01.2025 US 202519032206
(71) Applicant: Displine GmbH, 65189 Wiesbaden (DE)
(72) Inventor: Stanczyk, Piotr, 65189 Wiesbaden (DE); Nedzi, Bartlomiej, 26-600 Radom (PL)
(74) Representative: Farago-Schauer, Peter Andreas

(57) **Abstract**

A mounting system for rotatably mounting a tablet to a supporting element (4) comprising: a holder unit (5) having a holder backplate (55); and a rotation unit (1) comprising a rotating member (2) and a rotating member support (3), the rotating member support (3) being mountable to the supporting element (4) such that the rotating member support (3) is stationary with respect to the supporting element (4), the rotating member support (3) having a support seat (33) for accommodating the rotating member (3) in a rotatable manner between the supporting element (4) and the support seat (33), the support seat (33) having two support stoppers (34), the rotating member (2) having at least one rotating member wing (25) cooperating with two support stoppers (34) for limiting the rotation of the rotating member (2) in the rotating member support (3), the rotating member (2) being mountable to the holder backplate (55), such that the holder unit (5) is rotatable together with the rotating member (2) in the support seat (33), wherein the rotating member (2) includes a rotating member cutout (23) and the rotating member support (3) includes a support cutout (35), the rotating member cutout (23) and the support cutout (35) being aligned, such as to allow the passage of a cable (6).

## Description

### Field

The present invention relates to mounting system for a tablet or the like, in particular a mounting system with a rotation unit for rotatably mounting a tablet or the like to a supporting element.

### Background

Tablet computing devices, sometimes referred to as tablets, or as tablet computers, are generally planar, light-weight devices that include a touch-screen display. Examples include the Apple iPad, Kindle Fire, Motorola Xoom, Samsung Galaxy. Generally, tablets have a rectangular form factor that may be considered to be smaller than a traditional laptop or desktop computer monitor but larger than a smaller electronic device such as a smartphone.

In the prior art, it is known that tablets or the like can be attached to a wall in various ways. For example, there can be a wall mount in which the tablet is fastened via a snap or clip connection. The snap or clip connection can cover the edge of the tablet only partially with individual elements or completely, as is also known from tablet protective covers. Known wall mounts may further be pivotable. A wall mount for tablets is disclosed in US20170003712 A1, for example.

A further table wall mount is known from US2024328576 A1 which has been assigned to the present applicant and the content of which is fully incorporated by reference.

Yet a further table wall mount is known from the German Utility Model DE202024100408 U1 which has been equally assigned to the present applicant and the content of which is also fully incorporated by reference.

The prior art wall mounts are not free from shortcomings, as they do not permit the rotation of the mount with respect to a stationary mounting surface.

### Summary

According to a general aspect of the invention a mounting system is provided for rotatably mounting a tablet or the like to a supporting element comprising: a holder unit for holding a tablet or the like, the holder unit having a holder backplate; and a rotation unit comprising a rotating member and a rotating member support. The rotating member support may be mountable to the supporting element such that the rotating member support is stationary with respect to the supporting element in the mounted state thereof. The rotating member support may have a support seat for accommodating the rotating member in a rotatable manner between the supporting element and the support seat. The support seat may have two support stoppers for limiting the rotation of the rotating member in the rotating member support. The rotating member may have at least one rotating member wing cooperating with two support stoppers for limiting the rotation of the rotating member in the rotating member support. The rotating member may be mountable to the holder backplate, such that the holder unit is rotatable together with the rotating member in the support seat. The rotating member may include a rotating member cutout, and the rotating member support may include a support cutout, the rotating member cutout and the support cutout being aligned, such as to allow the passage of a cable for the powering of a tablet or the like. Accordingly, in view of the limited rotation range of the holder unit, the cable which may extend from the holder unit into a power box provided behind the rotation unit is prevented from excessive twisting which may result in the damaging of the cable.

Advantageously the mounting system of the invention may have two support stoppers which limit the rotation of the rotating member in the rotating member support up to an angle of 90° or less. An angle of 90° or less is advantageous as excessive twisting of the cable is limited. Furthermore, the angle of 90° is advantageous as it allows the transition of the tablet or the like between a horizontal and a vertical orientation and vice versa.

Further advantageously, in the mounting system of the invention, the rotating member may comprise two rotating member wings cooperating with the two support stoppers. The two rotating member wings may be arranged diametrically opposite on the rotating member and the two support stoppers may be arranged diametrically opposite on the rotating member support, such that the rotation of the rotating member with the mounted holder unit in the rotating member support is limited to 90°. In this arrangement as well, excessive twisting of the cable is advantageously limited. Furthermore, the angle of 90° is advantageous as it allows the transition of the tablet or the like between a horizontal and a vertical orientation and vice versa. The latter arrangement is also advantageous as it has a higher mechanical stability.

Further advantageously, in the mounting system of the invention, the rotating member support may comprise one or more support openings for allowing the passage of a respective support fixing means therethrough for fixedly mounting the rotating member support to the supporting element. Advantageously, the support fixing means is a screw.

Further advantageously, in the mounting system of the invention, the holder backplate may comprise one or more first holder openings. The one or more first holder openings may be aligned with the respective one or more support openings by rotating the holder unit with respect to the rotating member support, the first holder openings being dimensioned such as to allow unobstructed passage of the support fixing means therethrough. In this manner the mounting of the rotating member support is advantageously facilitated, in particular if the support fixing means are embodied as screws with enlarged screw heads.

Furthermore advantageously, in the mounting system of the invention, the rotating member may comprise one or more rotating member openings for engaging a respective rotating member connecting means. The holder backplate may comprise one or more second holder openings allowing the passage of a respective rotating member connecting means for mounting the holder unit to the rotating member. Advantageously the support cutout is dimensioned such as to allow unobstructed passage of a respective rotating member connecting means. In this manner, the connection of the rotating member to the holder backplate is facilitated.

Advantageously, the rotating member connecting means is embodied as one or more screws and further preferably one or more washers are interposed between the one or more screws and the holder backplate.

Furthermore advantageously, in the mounting system of the invention, the rotating member may comprise a rotating member protrusion and the holder backplate may comprise a holder recess or a holder opening. The rotating member protrusion may be adapted to cooperate with the holder recess or the holder opening when the holder unit is mounted to the rotating member. Preferably, the rotating member protrusion may be connected to the holder recess or the holder opening in a form-fitting manner. The form fit is particularly advantageous as it allows a precise positioning of the holder unit or the backplate thereof on the rotating member. In this manner precisely setting a rotation angle of the holder unit is facilitated. Advantageously, the rotating member protrusion and the holder recess or the holder opening may have a polygonal outline, in particular square, triangle, pentagon, hexagon, heptagon or octagon. Also, elliptic outlines are conceivable in the context of the present invention.

In one advantageous embodiment the holder unit may be made in one piece and may have a rectangular shape with guides for the tablet or the like on three sides a fourth side being open for introduction of a tablet or the like. Within the framework of the above embodiment, the holder backplate may be provided, on its inner side facing a tablet or the like in a mounted state, with a covering layer made of leather, imitation leather or non-woven fabric which at least partially covers the inner side. In this manner the inserted tablet or the like is prevented from being damaged or scratched during its insertion in or removal from the holder unit.

In a further advantageous embodiment, the holder unit may be a multi-element unit and may comprise a holder frame with a receptacle for the retention of the tablet or the like in the mounted state thereof in the receptacle and a holder mount. The holder mount may be interposed between the holder frame and the holder backplate. The holder mount may be mounted to the holder backplate, preferably by means of one or more screws. The holder frame may be mounted to the holder mount by suitable fastening means such as magnets.

Further advantageously, in the mounting system of the invention, the mounting system is a wall mounting and the supporting element is a wall. However, the mounting system may also be a support mounting system.

Further advantageously, in the mounting system of the invention, a cable mount may be provided with a plug for electrically connecting a tablet or the like to a cable. The plug may be embodied as a USB-C plug or a Lightning plug. However, according to the invention, other plugs are also conceivable.

Advantageously, the rotating member may be made of anodized aluminium and/or the rotating member support may be made of a CNC machined material comprising base polymers, fibres and fillers, as well as possibly solid lubricants. By way of example, the rotating member support may be made of Iglidur^{®} or Iglidur J. Iglidur^{®} materials are materials developed by Igus GMBH of Cologne Germany and are made of high-performance polymers that are characterized by their special properties namely: their special composition makes them extremely wear-resistant, robust and self-lubricating.

### Brief description of the drawings

The invention is explained in more detail below by means of embodiment examples with reference to the drawings. Whenever the term rear view is used in the following, the view from the supporting element is intended. The front view designates the view towards the supporting element. In the Figures,
Fig. 1 shows an exploded perspective rear view of a rotation unit of the invention;
Fig. 2 shows a rear view of the rotation unit of Fig. 1 in a partially mounted state;
Fig. 3 shows an exploded perspective front view of the rotation unit of Fig. 1;
Fig. 4 shows a front view of the rotation unit of Fig. 1 in a mounted state, namely as mounted to the supporting element;
Fig. 5 shows an exploded perspective rear view of a mounting system for rotatably mounting a tablet or the like in one possible embodiment of a tablet holder unit according to the invention including the rotation unit of Figs. 1 to 4;
Fig. 6 shows a rear view of the mounting system for rotatably mounting a tablet or the like of Fig. 5 in the mounted state thereof and holding a tablet or the like therein in a first initial rotational orientation;
Fig. 7 shows a rear view of the mounting system for rotatably mounting a tablet or the like of Fig. 5 in the mounted state thereof and holding a tablet or the like therein in a second final rotational orientation;
Fig. 8 shows a front view of the mounting system for rotatably mounting a tablet or the like of Fig. 5 in the mounted state thereof and holding a tablet or the like therein in the first initial rotational orientation as well as in a further intermediate rotational orientation;
Fig. 9 shows a front view of the mounting system for rotatably mounting a tablet or the like of Fig. 5 in the mounted state thereof and holding a tablet or the like therein in the second final rotational orientation;
Fig. 10 shows a perspective rear view of the mounting system for rotatably mounting a tablet or the like of Fig. 5 in a partially mounted state thereof and holding a tablet or the like therein, wherein the supporting element is partially broken away for more clarity;
Fig. 11 is a further exploded rear view of the mounting system for rotatably mounting a tablet or the like of Figs. 1 to 10; and
Fig. 12 shows an exploded perspective front view of a mounting system for rotatably mounting a tablet or the like in one further possible embodiment of a tablet holder unit according to the invention including the rotation unit of Figs. 1 to 11.

### Detailed description

Embodiments of the mounting according to the invention including the rotation unit of the invention are shown, for example, in the Figures of the invention.

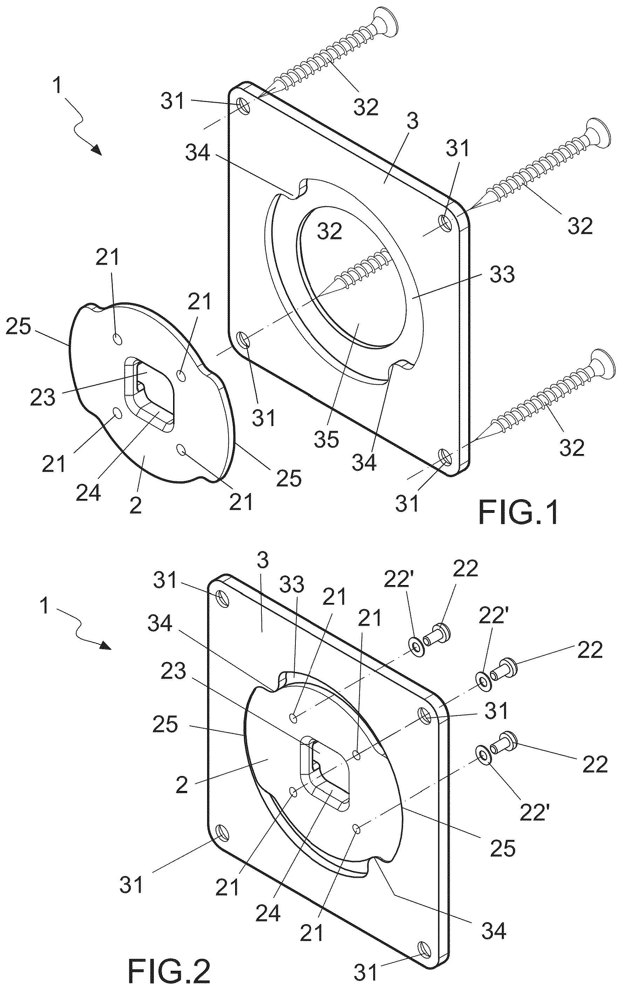

With reference to Figs. 1 to 12 a mounting system for rotatably mounting a tablet or the like to a supporting element 4 may comprise: a holder unit 5 for holding a tablet 7 or the like, the holder unit 5 having a holder backplate 55; and a rotation unit 1 comprising a rotating member 2 and a rotating member support 3. The rotating member support 3 may be mountable to the supporting element 4 (for instance a wall or a stand) such that the rotating member support 3 is stationary with respect to the supporting element 4 in the mounted state thereof. The rotating member support 3 may have a support seat 33 for accommodating the rotating member 3 in a rotatable manner between the supporting element 4 and the support seat 33. The support seat 33 may have two support stoppers 34 for limiting the rotation of the rotating member 2 in the rotating member support 3. The rotating member 2 may have at least one rotating member wing 25 cooperating with two support stoppers 34 for limiting the rotation of the rotating member 2 in the rotating member support 3. The rotating member 2 may be mountable to the holder backplate 55, such that the holder unit 5 is rotatable together with the rotating member 2 in the support seat 33. The rotating member 2 may include a rotating member cutout 23 and the rotating member support 3 may include a support cutout 35. The rotating member cutout 23 and the support cutout 35 may be aligned, such as to allow the passage of a cable 6 for the powering of the tablet 7 or the like.

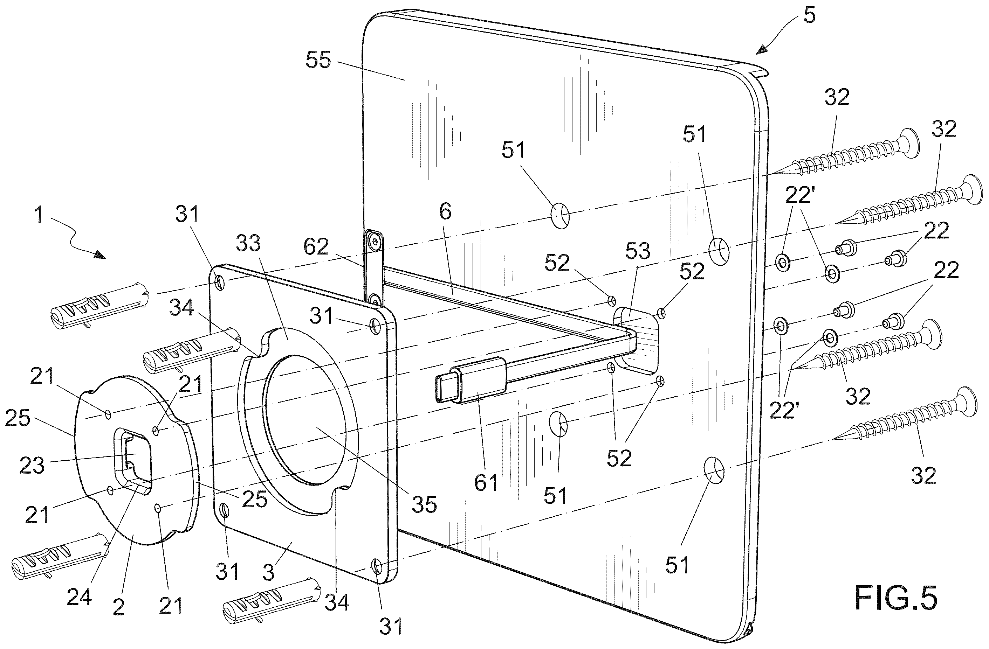

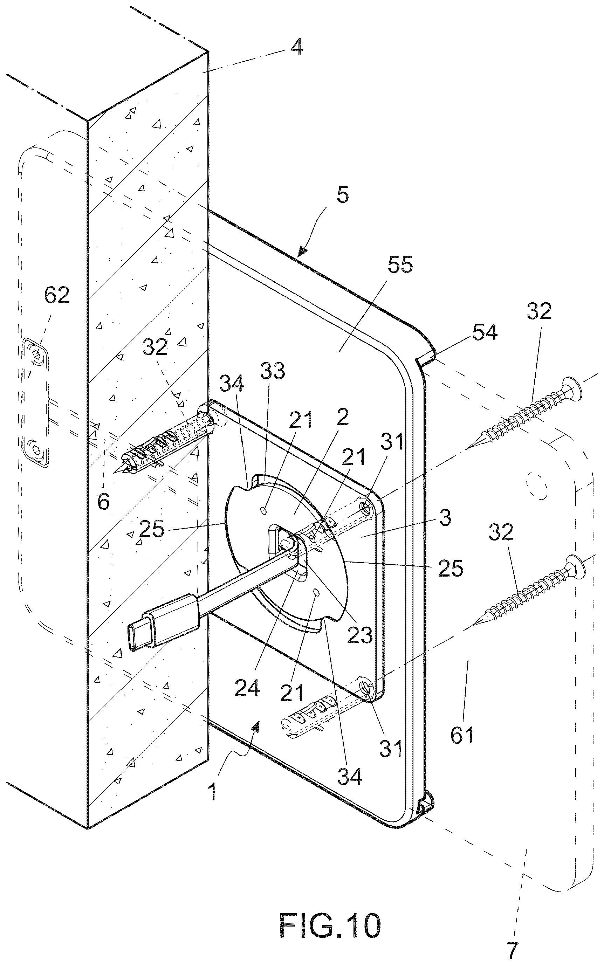

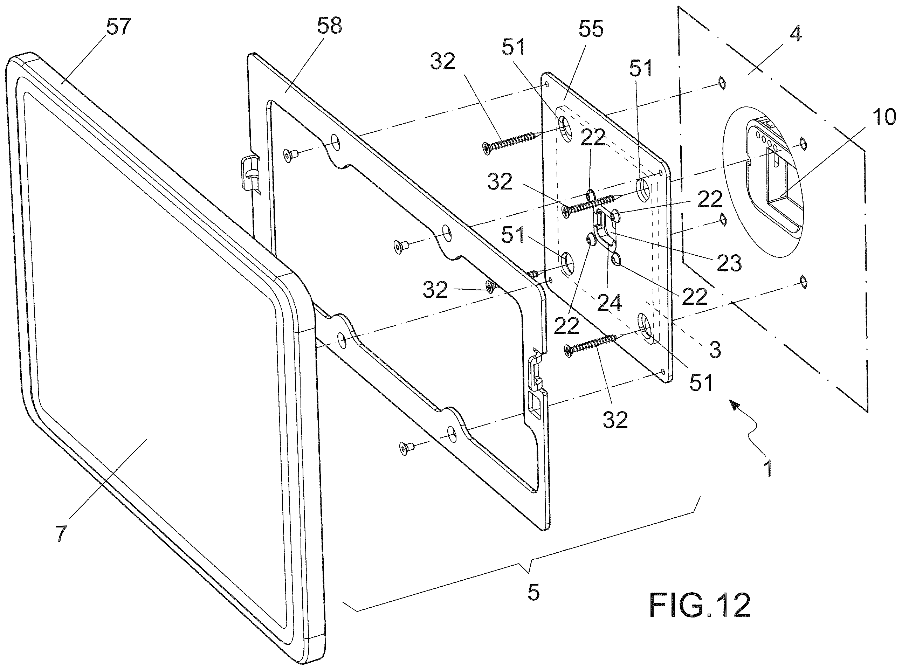

With this arrangement it is possible to limit the degree of the rotation of the holder unit 5 to a precise angle. Furthermore, as discussed in more detail in connection with Fig. 12, the supporting element 4 may house a power box 10 which is provided behind the mounting system and into which the cable 6 may be plugged in order to supply power to the tablet 7. As shown for instance in Figs. 5 and 10, as the cable 6 is bent essentially by 90° after passing the rotating member cutout 23 and the support cutout 35 in order to be plugged into the power box 10, the limited degree of rotation avoids excessive stress on the cable 6, so that the cable 6 is not excessively twisted. This avoids damage to the cable 6 due to rotation. Furthermore, the precise setting of the degree of rotation of the holder unit 5 allows correct positioning of the tablet in a desired position.

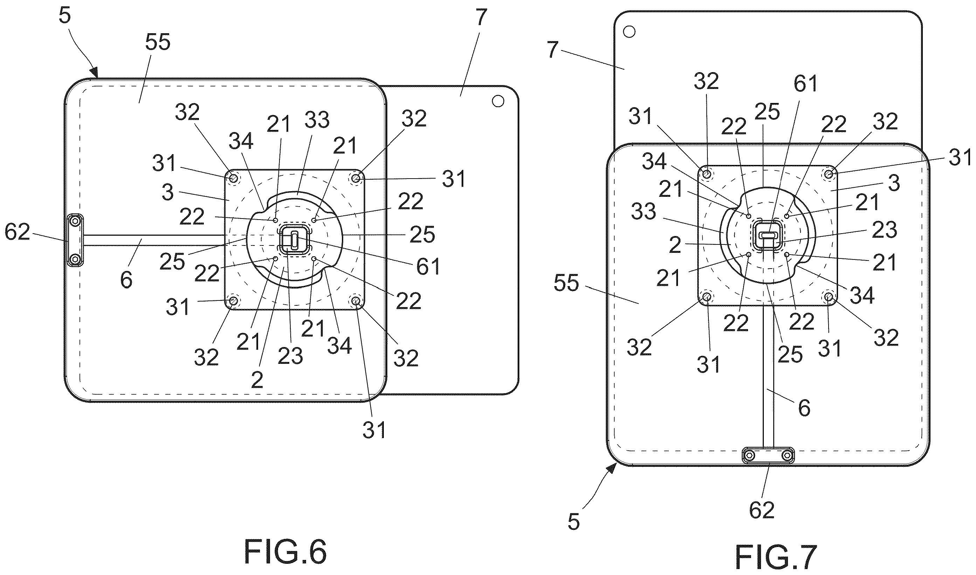

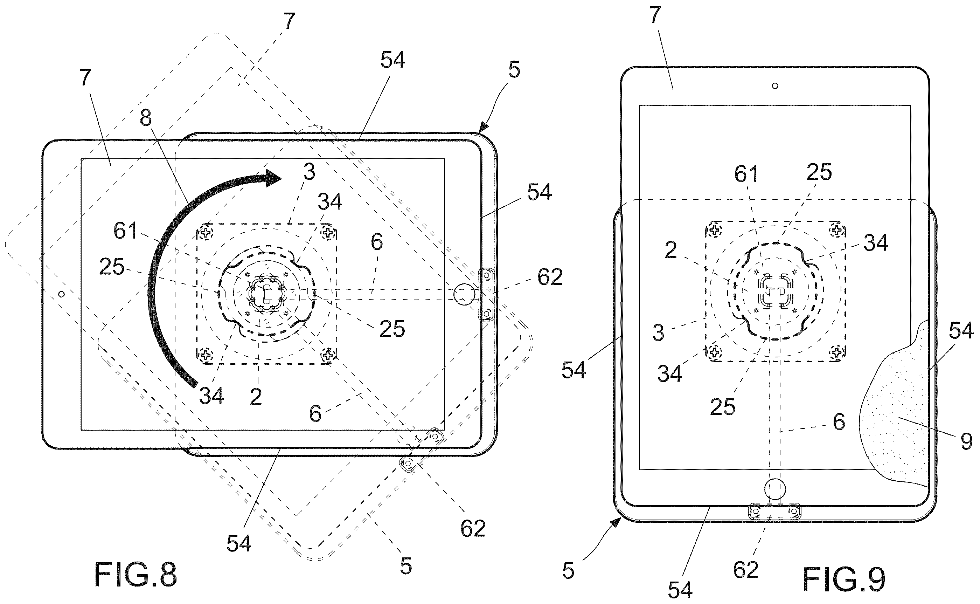

Advantageously, the two support stoppers 34 may limit the rotation of the rotating member 2 in the rotating member support 3 up to an angle of 90° or less. A preferred angle for the degree of rotation is 90° as this allows the transition of the tablet 7 with the holder unit 5 from a horizontal orientation with respect to the ground into a vertical orientation with respect to the ground and vice versa. The rotational motion of the tablet 7 with the holder unit 5 is best exemplified in Figs. 6 to 9 with arrow 8 of Fig. 8 indicating the rotation. Obviously intermediate positions of the holder unit 5 with the tablet 7 inserted therein are possible.

Advantageously, the friction between the rotating member 2 and the rotating member support 3 is such as to allow a smooth transition between an initial position / orientation (which is shown in Figs. 6 and 8) which may be the horizontal position / orientation of the tablet 7 with respect to the ground and a final position (which is shown in Figs. 7 and 9) which may be the vertical position / orientation with respect to the ground. Nevertheless, at the same time, the friction between the rotating member 2 and the rotating member support 3 must be sufficient to maintain a stable vertical or horizontal position, (and intermediate position at the same time, but this is just a side effect). Without this friction the mounting system seen in Figs. 5 to 10 may not stably maintain the horizontal or vertical position. The mounting system may loosely hang at angle of c.a. 45 degrees. This may be particularly the case if the rotation unit 2 is not centred in relation to the mounting system but to the tablet 7.

Further advantageously, the friction between the rotating member 2 and the rotating member support 3 may be set such as to allow stable positioning of the holder unit 5 with the tablet in an intermediate position, as shown by the dashed lines in Fig. 8. For instance, set points with a higher resistance (locking positions) to the rotation of the holder unit 5 may be provided along the circular arc parallel to the arrow 8, so that the holder unit 5 is retained in further fixed angular or rotational orientations such as 30° and/or 60°. Devising such locking positions is well-known to the person skilled in the art and will not be further described.

Advantageously, the rotating member 2 may comprise two rotating member wings 25 cooperating with the two support stoppers 34 (see for instance Fig. 1). The two rotating member wings 25 may be arranged diametrically opposite on the rotating member 2 and the two support stoppers 34 may be arranged diametrically opposite on the rotating member support 3 (see for instance Figs.1 and 2), such that the rotation of the rotating member 2 with the holder unit 5 in the rotating member support 3 may be limited to 90°.

Further advantageously, the depth of the support seat 33 is matching the thickness dimension of the rotating member 2. Further advantageously, the depth of the support 33 may exceed the thickness dimension of the rotating member 2, such that a rotation gap is present between the rotating member 2 and the supporting element 4 when the rotating support member 3 is mounted to the supporting element 4. In this way a direct contact between the supporting element 4 and the rotating member 2 is avoided.

According to an advantageous aspect of the invention, as shown in the attached figures, the rotating member support 3 may comprise one or more support openings 31 for allowing the passage of a respective support fixing means 32 therethrough for mounting the rotating member support 3 to the supporting element 4. The support fixing means 32 may be a screw. Although the appended figures show four fixing means / screws 32 and four corresponding openings 32, the number thereof can be varied as need be.

The holder backplate 55 may advantageously comprise one or more first holder openings 51, wherein the one or more first holder openings 51 can be aligned with the respective one more support openings 31 by rotating the holder unit 5 with respect to the rotating member support 3. The first holder openings 51 may be dimensioned such as to allow unobstructed passage of the support fixing means / screw 32 therethrough.

The latter feature may be advantageous for facilitating the mounting method of the rotating member support 3 to the supporting member 4. In fact, for the mounting of the rotating member support 3 to the supporting member 4, one may first connect the rotating member 2 to the backplate 55 of the holder unit 5 with rotating member connection means 22 (described further in detail hereinafter), wherein the rotating member support 3 is interposed between the rotating member 2 and the backplate 55 of the holder unit 5. In this state the rotating member 2 with the attached holder unit 5 may rotate in the support seat 33 of the rotating member support 3. Due to the dimensioning of the first holder openings 51 to allow unobstructed passage of the support fixing means / screw 32 therethrough, the support fixing means / screw 32 may completely pass through the aligned first holder openings 51 and may be affixed (screwed) through the respective one or more support openings 31 to the supporting element 4.

Further advantageously, the rotating member 2 may comprise one or more rotating member openings 21 for engaging a respective rotating member connecting means 22 and the holder backplate 55 may comprise one or more second holder openings 52 allowing the passage of a respective rotating member connecting means 22 such as to mount the holder unit 5 with the backplate 55 to the rotating member 2. The support cutout 35 may be dimensioned such as to allow unobstructed passage of the respective rotating member connecting means 22.

Conveniently, the rotating member connecting means 22 may be embodied as one or more screws which are screwed to the suitably threaded rotating member openings 21. Further preferably, washers 22' may be interposed between the screws 22 and the holder backplate 55.

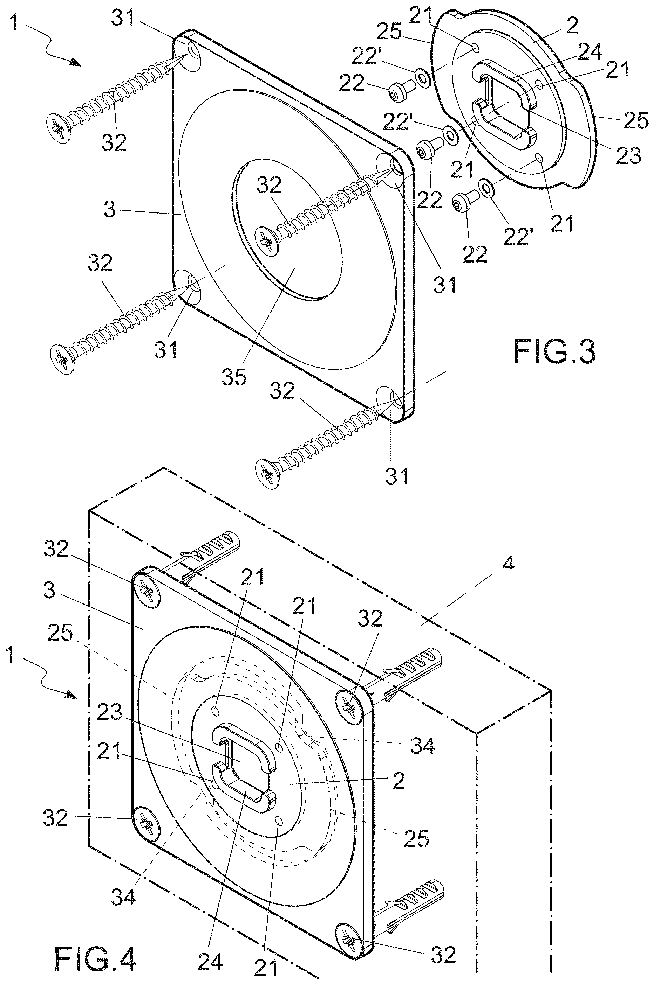

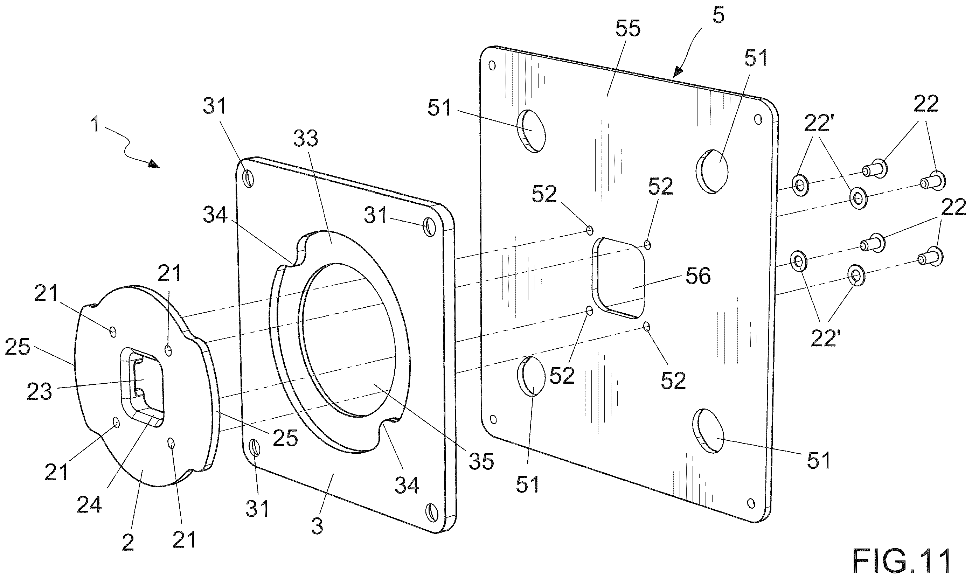

According to a particularly advantageous aspect of the present invention, as shown for instance in Figs. 3 and 4, the rotating member 2 may comprise a rotating member protrusion 24 and, as shown for instance in Figs. 11 and 12, the holder backplate 55 may comprise a holder recess 53 (Fig. 5) or a holder opening 56 (Fig. 11), the rotating member protrusion 24 being adapted to cooperate with the holder recess 53 or the holder opening 56 when the holder unit 5 is mounted to the rotating member 2. In a particularly advantageous manner, the rotating member protrusion 24 may be connected to the holder recess 53 or to the holder opening 56 in a form-fitting manner. The form fit is particularly advantageous as it allows a precise positioning of the holder unit 5 or the backplate 55 thereof on the rotating member 2.

The rotating member protrusion 24 and the holder recess 53 or the holder opening 56 may be polygonal, in particular square, or may be square with rounded edges. Further polygonal or elliptic shapes are conceivable in the context of the preset invention.

Advantageously, as shown in the embodiment of Figs. 1 to 11, the holder unit 5 may be made in one piece and has a rectangular shape with guides 54 for the tablet 7 or the like on three sides, a fourth side being open for introduction of a tablet 7 or the like. In this embodiment, the holder recess 53 can also be implemented as an opening.

In the embodiment of Figs. 1 to 11, as shown in Fig. 9, the holder backplate 55 may be provided, on its inner side facing a tablet 7 or the like in a mounted state, with a covering layer 9 made of leather, imitation leather or non-woven fabric which at least partially covers the inner side. The covering 9 is further described in the German Utility Model DE202024100408 U1 assigned to the current assignee, the content of which is specially incorporated by reference as far as the present covering 9 is concerned, and otherwise in general as far as the tablet holder is concerned.

In the embodiment of Fig. 12, which as far as the rotation unit 1 with the rotating member 2 and the rotating member support 3 are concerned is the same as the embodiment of Figs.1 to 11, the holder unit 5 is different and has a multi-element structure. Accordingly, only the holder unit 5 will be discussed hereinafter.

The multi-element holder unit 5 of Fig. 12 may comprise, in addition to the backplate 55, a holder frame 57 with a receptacle for the retention of the tablet 7 or the like in the mounted state thereof in the receptacle and may have further a holder mount 58, wherein the holder mount 58 is interposed between the holder frame 57 and the holder backplate 55, the holder mount 58 being mountable to the holder backplate 55, preferably by means of one or more screws, as shown in Fig. 12. The backplate 55 is provided in the embodiment with suitably threaded openings.

Advantageously, the holder frame 57 is mounted to the holder mount 58 by suitable fastening means, which may be magnetic fastening means. In this regard reference is made to US2024328576 A1 wherein the current holder frame 57 is designated as frame member 2 and the current holder mount 58 is designated as wall mount 9 and the content of which is generally incorporated by reference. Specifically, the current fastening means may by the same as the fastening means for fastening the frame member 2 to the wall mount 9 of US2024328576 A1 and the tablet may be attached in the same manner to the current holder frame 57 as the tablet to the frame member 2 of US2024328576 A1.

The mounting system of the present invention may be devised as a wall mount and the supporting element 4 as a wall. Nevertheless, also stands like desk mounts or the like are envisaged by the present invention.

With further reference to Fig. 12 a power box 10 is shown inserted in a wall opening. The power box 10 is suitable for energizing the table 7 when the cable 6 is plugged into the power box 10. The power box 10 may be embodied as a rechargeable battery or a conventional charger connected to the power lines and supplying power suitable for the tablet.

In all embodiments of the present invention the holder unit 5 may have a cable mount 62 provided with a plug for electrically connecting the tablet 7 or the like to a cable 6.

Advantageously, the rotating member 2 may be made of anodized aluminium and/or the rotating member support 3 may be made of a CNC machined material comprising base polymers, fibres and fillers, and possibly solid lubricants. A particularly suitable material for the rotating member support 3 is Iglidur^{®} or Iglidur J. Iglidur^{®} materials are developed by Igus GmbH of Cologne Germany and are made of high-performance polymers that are characterized by an extremely high wear-resistance, robustness and self-lubrication.

It is understood that when an element is referred to as being "mounted on," "connected to," "coupled to," or "in contact with" another element, the element may then be directly on, connected to, or coupled to the other element, or there may further be intervening elements that are either merely interposed or connect or couple or keep the element in contact with the other element. On the other hand, when an element is described as being "directly on" another element, "directly connected" thereto, "directly coupled" or "directly in contact" therewith, this is to be understood as meaning that there are no interposed elements.

Although the expressions "first," "second," etc., may be used herein to refer to various elements, components, areas, and/or portions, such elements, components, areas, and/or portions are not limited by such expressions. The expressions are used only to distinguish one element, component, area, or portion from another element, component, area, or portion. Therefore, a first element, component, area or portion discussed below may be referred to as a second element, second component, second area or portion without departing from the teachings of the present invention.

Embodiments of the invention are described herein with reference to views that are schematic representations of embodiments of the invention. Therefore, the actual thickness of the components may differ therefrom, and variations from the shapes in the drawings, for example due to manufacturing processes and/or tolerances, are to be expected. Embodiments of the invention are not to be understood as limited to the particular shapes of the areas shown herein but are intended to include variations in the shapes resulting, for example, from the method of manufacture. An area shown or designated as square or rectangular will typically also have rounded or curved features due to normal manufacturing tolerances. Therefore, the areas shown in the figures are schematic in nature, and their shapes are not intended to represent the exact shape of any area of a device or to limit the scope of protection of the invention.

Regarding the term "comprise," it must be said for clarity purposes that, when a first device portion comprises a second device portion, this means that the first device portion "has" the second device portion and does not necessarily surround the latter in terms of arrangement unless, for example, an arrangement in terms of position and shape is described.

Further possible embodiments are described in the following claims. In particular, the various features of the embodiments described above can also be combined, provided they are not mutually technically exclusive.

The reference numbers mentioned in the following claims or items are for convenience only and in no way limit the claims to the embodiments shown in the figures.

The embodiments shown here are only examples of the present invention and must therefore not be understood as limiting. Alternative embodiments contemplated by the person skilled in the art are equally encompassed by the scope of protection of the present invention.

The present invention may be characterized by the following items:
Item 1 A mounting system for rotatably mounting a tablet or the like to a supporting element comprising: a holder unit for holding a tablet or the like, the holder unit having a holder backplate; and a rotation unit comprising a rotating member and a rotating member support, the rotating member support being mountable to the supporting element such that the rotating member support is stationary with respect to the supporting element in the mounted state thereof, the rotating member support having a support seat for accommodating the rotating member in a rotatable manner between the supporting element and the support seat, the support seat having two support stoppers for limiting the rotation of the rotating member in the rotating member support, the rotating member having at least one rotating member wing cooperating with two support stoppers for limiting the rotation of the rotating member in the rotating member support, the rotating member being mountable to the holder backplate, such that the holder unit is rotatable together with the rotating member in the support seat, wherein the rotating member includes a rotating member cutout and the rotating member support includes a support cutout, the rotating member cutout and the support cutout being aligned, such as to allow the passage of a cable for the powering of a tablet or the like.
Item 2 The mounting system of one or more of the preceding items, wherein the two support stoppers limit the rotation of the rotating member in the rotating member support up to an angle of 90° or less.
Item 3 The mounting system of one or more of the preceding items, wherein the rotating member comprises two rotating member wings cooperating with the two support stoppers and wherein two rotating member wings are arranged diametrically opposite on the rotating member and the two support stoppers are arranged diametrically opposite on the rotating member support, such that the rotation of the rotating member with the holder unit in the rotating member support is limited to 90°.
Item 4 The mounting system of one or more of the preceding items, wherein the rotating member support comprises one or more support openings for allowing the passage of a respective support fixing means therethrough for mounting the rotating member support to the supporting element.
Item 5 The mounting system of one or more of the preceding items, wherein the support fixing means is a screw.
Item 6 The mounting system of one or more of the preceding items, wherein the holder backplate comprises one or more first holder openings, wherein the one or more first holder openings can be aligned with the respective one more support openings by rotating the holder unit with respect to the rotating member support, the first holder openings being dimensioned such as to allow unobstructed passage of the support fixing means therethrough.
Item 7 The mounting system of one or more of the preceding items, wherein the rotating member comprises one or more rotating member openings for engaging a respective rotating member connecting means and wherein the holder backplate comprises one or more second holder openings allowing the passage of a respective rotating member connecting means such as to mount the holder unit to the rotating member, wherein the support cutout is dimensioned such as to allow unobstructed passage of a respective rotating member connecting means.
Item 8 The mounting system of one or more of the preceding items, wherein the rotating member connecting means is a screw, and further preferably comprising a washer interposed between the screw and the holder backplate.
Item 9 The mounting system of one or more of the preceding items, wherein the rotating member comprises a rotating member protrusion and the holder backplate comprises a holder recess or a holder opening, the rotating member protrusion being adapted to cooperate with the holder recess or the holder opening when the holder unit is mounted to the rotating member.
Item 10 The mounting system of one or more of the preceding items, wherein the rotating member protrusion is connected to the holder recess or the holder opening in a form-fitting manner.
Item 11 The mounting system of one or more of the preceding items, wherein the rotating member protrusion and the holder recess or the holder opening are polygonal, in particular square, or square with rounded edges.
Item 12 The mounting system of one or more of the preceding items, wherein the holder unit is made in one piece and has a rectangular shape with guides for the tablet or the like on three sides, a fourth side being open for introduction of a tablet or the like.
Item 13 The mounting system of one or more of the preceding items, wherein the holder backplate is provided, on its inner side facing a tablet or the like in a mounted state, with a covering layer made of leather, imitation leather or non-woven fabric which at least partially covers the inner side.
Item 14 The mounting system of one or more of the preceding items, wherein the holder unit further comprises a holder frame with a receptacle for the retention of the tablet or the like in the mounted state thereof in the receptacle and a holder mount, wherein the holder mount is interposed between the holder frame and the holder backplate, the holder mount being mounted to the holder backplate, preferably by means of one or more screws.
Item 15 The mounting system of one or more of the preceding items, wherein the holder frame is mounted to the holder mount by suitable fastening means.
Item 16 The mounting system of one or more of the preceding items, wherein the mounting system is a wall mount and the supporting element is a wall.
Item 17 The mounting system of one or more of the preceding items, further comprising a cable mount provided with a plug for electrically connecting a tablet or the like to a cable.
Item 18 The mounting system of one or more of the preceding items, wherein the rotating member is made of anodized aluminium and/or wherein the rotating member support is made of a CNC machined material made of high-performance plastics or high-performance polymers, possibly self-lubricating.
Item 19 The mounting system of one or more of the preceding items, wherein the friction between the rotating member and the rotating member support is adjusted such as to stably maintain the tablet or the like in a horizontal or a vertical position as compared to the ground and/ or wherein the friction between the rotating member, the rotating member support and the holder backplate is adjusted such as to stably maintain the tablet or the like in a horizontal or a vertical position as compared to the ground.

### List of reference numbers

- 1: rotation unit
- 2: rotating member
- 21: rotating member openings
- 22: rotating member connecting means
- 22': washers
- 23: rotating member cutout
- 24: rotating member protrusion
- 25: rotating member wings
- 3: rotating member support
- 31: support openings
- 32: support fixing means
- 33: support seat
- 34: support stopper
- 35: support cutout
- 4: supporting element / wall
- 5: tablet holder unit
- 51: first holder openings
- 52: second holder openings
- 53: holder recess
- 54: holder guides
- 55: holder backplate
- 56: holder opening
- 57: holder frame
- 58: holder mount
- 6: cable
- 61: cable plug
- 62: cable mount
- 7: tablet
- 8: arrow
- 9: covering layer
- 10: power box

## Claims

1. A mounting system for rotatably mounting a tablet or the like to a supporting element (4) comprising:
a holder unit (5) for holding a tablet (7) or the like, the holder unit (5) having a holder backplate (55); and
a rotation unit (1) comprising a rotating member (2) and a rotating member support (3),
the rotating member support (3) being mountable to the supporting element (4) such that the rotating member support (3) is stationary with respect to the supporting element (4) in the mounted state thereof, the rotating member support (3) having a support seat (33) for accommodating the rotating member (3) in a rotatable manner between the supporting element (4) and the support seat (33), the support seat (33) having two support stoppers (34) for limiting the rotation of the rotating member (2) in the rotating member support (3),
the rotating member (2) having at least one rotating member wing (25) cooperating with two support stoppers (34) for limiting the rotation of the rotating member (2) in the rotating member support (3), the rotating member (2) being mountable to the holder backplate (55), such that the holder unit (5) is rotatable together with the rotating member (2) in the support seat (33),
wherein the rotating member (2) includes a rotating member cutout (23) and the rotating member support (3) includes a support cutout (35), the rotating member cutout (23) and the support cutout (35) being aligned, such as to allow the passage of a cable (6) for the powering of a tablet or the like.

2. The mounting system of claim 1, wherein the two support stoppers (34) limit the rotation of the rotating member (2) in the rotating member support (3) up to an angle of 90° or less.

3. The mounting system of claims 1 or 2, wherein the rotating member (2) comprises two rotating member wings (25) cooperating with the two support stoppers (34) and wherein two rotating member wings (25) are arranged diametrically opposite on the rotating member (2) and the two support stoppers (34) are arranged diametrically opposite on the rotating member support (3), such that the rotation of the rotating member (2) with the holder unit (5) in the rotating member support (3) is limited to 90°.

4. The mounting system of one or more of the preceding claims, wherein the rotating member support (3) comprises one or more support openings (31) for allowing the passage of a respective support fixing means (32) therethrough for mounting the rotating member support (3) to the supporting element (4), wherein preferably the support fixing means (32) is a screw.

5. The mounting system of claim 4, wherein the holder backplate (55) comprises one or more first holder openings (51), wherein the one or more first holder openings (51) can be aligned with the respective one more support openings (31) by rotating the holder unit (5) with respect to the rotating member support (3), the first holder openings (51) being dimensioned such as to allow unobstructed passage of the support fixing means (32) therethrough.

6. The mounting system of one or more of the preceding claims, wherein the rotating member (2) comprises one or more rotating member openings (21) for engaging a respective rotating member connecting means (22) and wherein the holder backplate (55) comprises one or more second holder openings (52) allowing the passage of a respective rotating member connecting means (22) such as to mount the holder unit (5) to the rotating member (2), wherein the support cutout (35) is dimensioned such as to allow unobstructed passage of a respective rotating member connecting means (22), wherein preferably the rotating member connecting means (22) is a screw, and further preferably comprising a washer (22') interposed between the screw and the holder backplate (55).

7. The mounting system of one or more of the preceding claims, wherein the rotating member (2) comprises a rotating member protrusion (24) and the holder backplate (55) comprises a holder recess (53) or a holder opening (56), the rotating member protrusion (24) being adapted to cooperate with the holder recess (53) or the holder opening (56) when the holder unit (5) is mounted to the rotating member (2), wherein preferably the rotating member protrusion (24) is connected to the holder recess (53) or the holder opening (56) in a form-fitting manner.

8. The mounting system of claim 7, wherein the rotating member protrusion (24) and the holder recess (53) or the holder opening (56) are polygonal, in particular square, or square with rounded edges.

9. The mounting system of one or more of the preceding claims, wherein the holder unit (5) is made in one piece and has a rectangular shape with guides (54) for the tablet or the like on three sides, a fourth side being open for introduction of a tablet or the like.

10. The mounting system of one or more of the preceding claims, wherein the holder backplate (55) is provided, on its inner side facing a tablet or the like in a mounted state, with a covering layer (9) made of leather, imitation leather or non-woven fabric which at least partially covers the inner side.

11. The mounting system of one or more of the preceding claims 1 to 8, wherein the holder unit (5) further comprises a holder frame (57) with a receptacle for the retention of the tablet or the like in the mounted state thereof in the receptacle and a holder mount (58), wherein the holder mount (58) is interposed between the holder frame (57) and the holder backplate (55), the holder mount (58) being mounted to the holder backplate (55), preferably by means of one or more screws, wherein preferably the holder frame (57) is mounted to the holder mount (58) by suitable fastening means.

12. The mounting system of one or more of the preceding claims, wherein the mounting system is a wall mount and the supporting element (4) is a wall.

13. The mounting system of one or more of the preceding claims, further comprising a cable mount (62) provided with a plug for electrically connecting a tablet or the like to a cable (6).

14. The mounting system of one or more of the preceding claims, wherein the rotating member (2) is made of anodized aluminium and/or wherein the rotating member support (3) is made of a CNC machined material made of high-performance plastics or high-performance polymers, possibly self-lubricating. The CNC machined material may also be made of base polymers, fibres and fillers, and possibly solid lubricants. The CNC machined material may also be made of Igilidur j.

15. The mounting system of one or more of the preceding claims, wherein the friction between the rotating member (2) and the rotating member support (3) is adjusted such as to stably maintain the tablet or the like in a horizontal or a vertical position as compared to the ground and/ or wherein the friction between the rotating member (2), the rotating member support (3) and the holder backplate (55) is adjusted such as to stably maintain the tablet or the like in a horizontal or a vertical position as compared to the ground.
